# EUROPEAN PATENT SPECIFICATION

(11) **EP 3 141 815 B1**
(45) Date of publication and mention of the grant of the patent: **13.03.2019**
(21) Application number: 15184176.4
(22) Date of filing: 08.09.2015
(51) Int. Cl.: F22B 1/28, A47L 11/34

(54) **BOILER AND METHOD OF MANUFACTURE**
KESSEL UND VERFAHREN ZUR HERSTELLUNG
FILTRE ET PROCÉDÉ DE FABRICATION

(43) Date of publication of application: 15.03.2017
(73) Proprietor: Black & Decker, Inc., Newark, DE 19711 (US)
(72) Inventor: Walmsley, Neil, Ferryhill, Durham DL17 8BQ (GB); Stones, Kevin, Bishop Auckland, Durham DL14 0PH (GB)
(74) Representative: SBD IPAdmin

(56) References cited:
- DE-U1- 20 313 280
- US-A1- 2008 022 480
- US-A1- 2015 202 659

## Description

The present invention relates to a boiler and a method of manufacture. In particular the present invention relates to a boiler for use in a steam cleaning apparatus.

Steam cleaning appliances having become increasingly popular over the last few years. An example of such a steam cleaning apparatus is a steam cleaning mop for cleaning tiled or hardwood floors. Handheld steam cleaning appliances can be used for cleaning work surfaces such as in the kitchen.

A steam cleaning apparatus comprises a steam generating apparatus or boiler which transfers sufficient heat energy to water in order to convert it into steam. The steam is then directed via a steam cleaning head to the surface which is to be cleaned.

One boiler for a steam mop is shown in US 8,554,063. The boiler comprises a heating element embedded in a central heating unit. The heating unit is seated in a housing and an outer spiral channel on the heating unit defines a water channel between the housing and the heating element. The heating element further comprises a central spiral core for defining another channel on an inner core of the heating unit. The boiler requires three separate cast parts and requires seals therebetween. Care must be taken during manufacture otherwise a misplaced or pinched seal will cause the boiler to leak. Furthermore the seals may perish over time and cause the boiler to malfunction.

Another boiler is shown in US2015/202659. The boiler includes a water tank, a heater of the water in order to produce steam, and an extractor for the steam produced. The heater of the steam includes storage for calories generated, prior to the cleaning operation, by electrical connections for producing heat that can be reversibly connected to an electric power supply includes a solid body, which is traversed by a spiral channel, which links the water tank to the means for extracting steam, and through which the water travels.

Another boiler for a handheld steam cleaner is shown in US2008/0022480. The boiler comprises a cast metal cylindrical body having an embedded heating element and water passage. The heating element is spiral and inserted inside the spiral water passage and the heating element and the water passage are in close proximity to each other. A problem with the boiler is that the protruding terminals of the heating element prevent the heating element from fitting into the internal of the water passage. This means that the heating element must be finally shaped and bent after insertion into the spiral of the water passage. This increases the complexity of the manufacture and risks damage to either the water passage or the heating element. Furthermore the centre of the boiler is hollow. This means that the thermal mass of the boiler is reduced and also heating ability of the boiler.

In one aspect of the invention there is provided a boiler comprising: a body; a water cooling circuit having a water inlet and a steam outlet and the water cooling circuit comprises a second coiled portion; a heating element having a first terminal and a second terminal and the heating element comprises a first coiled portion; wherein one of the heating element and the water cooling circuit are nested inside the other of the heating element and the water cooling circuit; and the first coiled portion of the heating element and the second coiled portion of the water cooling circuit are positioned around one of the first terminal, the second terminal, the water inlet and the steam outlet; and at least the first coiled portion of the heating element and the second coiled portion of the water cooling circuit are embedded in the body, and the water cooling circuit is a tube.

The coiled portion of one the heating element and the water cooling circuit fits inside the other coiled portion. One of the terminals, the water inlet or the steam output is inside both coiled portions. This means that the heating element and the water cooling circuit can easily be assembled providing a compact and reliable boiler.

Preferably the first coiled portion of the heating element is nested inside the second coiled portion of the water cooling circuit. This means that the water flow path is longer and increases the thermal transfer of heat energy from the heating element to the water in the water cooling circuit.

Preferably the first terminal, the second terminal, the water inlet and the steam outlet are substantially parallel to a longitudinal axis of the boiler. This means that the coiled portion of the heating element or the water cooling circuit can be easily inserted
into the centre thereof which makes assembly easier and less likely to damage components of the boiler.

Preferably the longitudinal axes of the first coiled portion of the heating element and the second coiled portion of the water cooling circuit are substantially parallel to a longitudinal axis of the boiler.

Preferably the water inlet of the water cooling circuit is positioned inside and concentric with the coiled portions of the heating element and the water cooling circuit. This means that the cold water in the water inlet will be adjacent to the hottest part of the boiler and heating element. This means that the heat transfer from the boiler to the water will be greater that if the water inlet is positioned adjacent to any other part of the boiler.

Alternatively the steam outlet of the water cooling circuit is positioned inside and concentric with the coiled portions of the heating element and the water cooling circuit.

Preferably the first terminal, the second terminal, the water inlet and the steam outlet are substantially aligned in the same plane. This makes assembly easier because it allows a simple visual check when a casting tool clamps the heating element and cooling coil in place. This means that the heating element and the water cooling circuit are aligned before being embedded in the body.

Preferably the water cooling circuit is a tube embedded in the body. Preferably the body is cast around the water cooling circuit and the heating element.

Preferably the first and second terminals project from a first side of the body and the water inlet projects from a second, different side of the body. Preferably the water inlet and the steam outlet project from the second side of the body. Preferably the water inlet and the steam outlet project from opposite sides of the boiler. By projecting the water inlet and the steam outlet from opposite sides, the size of the boiler can be reduced because a 180 degree bend is not required in the body of the boiler if the boiler is located between the water tank and the cleaning head.

Preferably one of the first terminal and the second terminal is positioned inside the second coiled portion of the water cooling circuit and the other of the first terminal and the second terminal is positioned outside the second coiled portion of the water cooling circuit. Preferably one of the water inlet and the steam outlet is positioned inside the first coiled portion of the heating circuit and the other of the water inlet and the steam output is positioned outside the first coiled portion of the heating circuit. This makes assembly of the boiler easier.

Preferably the outer surface of the first coiled portion of the heating element is adjacent a surface of the second coiled portion of the water cooling circuit.

In a second aspect of the invention there is a steam cleaning apparatus comprising a boiler according to the first aspect.

In a third aspect of the invention there is a method of manufacturing of a boiler comprising: forming a heating element comprising a first terminal and a second terminal and a first coiled portion; forming a tubular water cooling circuit comprising a water inlet and a steam outlet and a second coiled portion; placing one of the first coiled portion of the heating element and the second coiled portion of the water cooling circuit inside the other of the first coiled portion of the heating element and the second coiled portion of the water cooling circuit such that the first coiled portion of the heating element and the second coiled portion of the water cooling circuit are positioned around one of the first terminal, the second terminal, the water inlet and the steam outlet; and forming a body around at least the first coiled portion of heating element and the second coiled portion of the water cooling circuit such that the coiled portions of the heating element and the water cooling circuit are embedded in the body.

Embodiments of the present invention aim to address the aforementioned problems.

Various other aspects and further embodiments are also described in the following detailed description and in the attached claims with reference to the accompanying drawings, in which:
Figure 1 shows a perspective view of the steam cleaning apparatus according to an embodiment;
Figure 2 shows a side view of the boiler according to an embodiment;
Figure 3 shows a cross sectional view of the boiler according to an embodiment;
Figure 4 shows a partial plan view of the boiler according to an embodiment;
Figure 5 shows a partial perspective of the boiler according to an embodiment;
Figure 6 shows a partial perspective view of the boiler according to an embodiment;
Figure 7 shows a side schematic view of a boiler according to an embodiment.

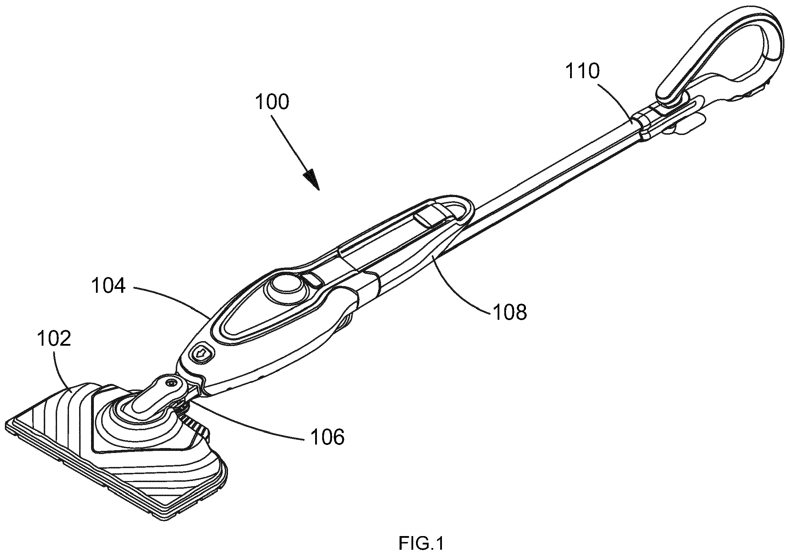

Figure 1 shows a perspective view of a steam cleaning apparatus 100. The steam cleaning apparatus 100 can be any appliance for generating steam for cleaning surfaces. Figure 1 shows an exemplary steam mop 100 which is a non-limiting example of a steam cleaning appliance. Hereinafter the term steam mop will be used to describe the steam cleaning appliance, but the present invention can be applicable to steam cleaning appliances other than steam mops.

The steam mop 100 comprises a steam head 102 for delivering steam to a surface to be cleaned. Typical surfaces are tiled floors or hardwood floors, but other surfaces may be cleaned with the steam mop 100. The steam head 102 may comprise a pad or cloth (not shown) fixed to the underside of the steam head 102 to pick up dirt dislodged by the steam cleaning action.

The steam head 102 is coupled to a body 104 by an articulated joint 106. The articulated joint 106 may comprise a universal joint for allowing at least two degrees of freedom between the steam head 102 and the body 104. The articulated joint 106 is hollow and comprises a steam duct (not shown) for delivering steam to the steam head 102.

The body 104 of the steam mop 100 may comprise a clam shell construction. The two halves of the clam shell are fixed together with screws and encase a steam generating apparatus or boiler 200. Hereinafter the term boiler will be used. The boiler 200 is not shown in Figure 1, but will be described in further detail in the subsequent Figures.

The body 104 is coupled to a water tank 108 for holding a water reservoir. The water tank 108 is in fluid communication with the boiler 200. The water tank 108 may be removable for allowing the user to refill with water. The boiler 200 is also in fluid communication with the cleaning head 102. A pump (not shown) may pump water from the water tank 108 to the boiler 200.

A handle 110 is coupled to the body 104 and provides a grippable portion for the user to hold during use. The body 104 and the handle 110 may have controls for operating the steam mop. The controls are coupled to an electronic controlling circuit (not shown). The steam mop 100 comprises an electrical heating circuit (not shown) which may be electrically coupled to a power cord (not shown) for connecting to an alternating current (AC) electricity supply. The AC electricity supply is configured to deliver electrical energy to the boiler 200. In some embodiments a power cord is not needed because the steam mop 100 electrically and physically couples with a docking and charging station. In some alternative embodiments, the steam mop may be powered by a DC electricity supply such as a battery (not shown).

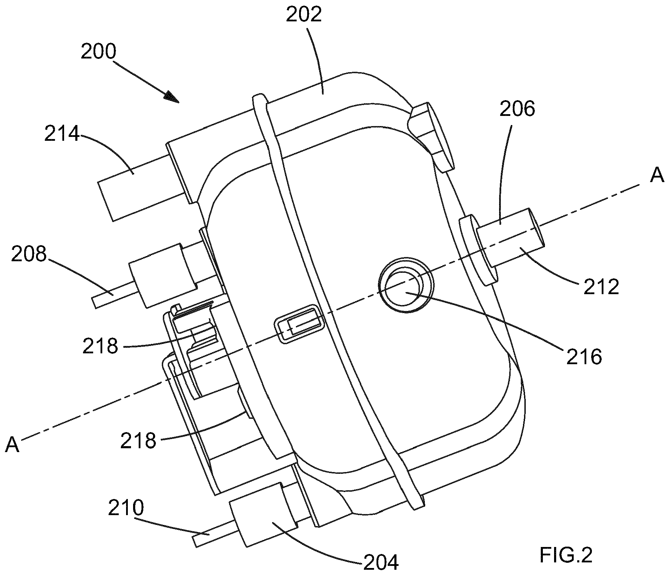

Turning the Figure 2, the boiler 200 will be discussed in further detail. Figure 2 shows a side view of the boiler 200. The boiler 200 comprises a cast body 202. The cast body 202 is formed from aluminium or other suitable material for moulding the shape of the boiler. Aluminium is a preferred material because it can be easily moulded into a required shape and has good thermal properties. For example aluminium has a conductivity and specific heat capacity suitable for a boiler material. In other embodiments the body 202 of the body can be moulded or formed by any other suitable process such that the components of the boiler are embedded therein.

The cast body 202 comprises one or more mounting pegs 216 for mounting the boiler 200 in a reciprocal recess (not shown) in the body 104 of the steam mop 100. Whilst Figure 2 only shows one mounting peg 216, there may be a plurality of mounting pegs for securely attaching the boiler 200 to the body 104 of the steam mop 100. The cast body 202 further comprises at least one sensor mounting point 218 for coupling external sensors and / or thermal trips to the boiler 200.

The boiler 200 comprises a heating element 204 and a water cooling circuit 206. The heating element 204 and the water cooling circuit 206 are embedded within the body 202 of the boiler 200 and are only partially shown projecting from the boiler 200.

The heating element 204 is electrically connected to the circuit and is arranged to generate heat when an electrical current is passed therethrough. The composition of the heating element 204 is known and will not be discussed any further. The heating element 204 comprises a first terminal 208 and a second terminal 210. The first and second terminals 208, 210 are coupled to the electrical circuit via electrical connectors (not shown). The heating element 204 is embedded in the cast body 202.

The water cooling circuit 206 is in fluid communication with the water tank 108 and the steam cleaning head 102. The water cooling circuit 206 comprises a hollow tube which is embedded in the cast body 202. A hollow tube embedded in the cast body means that the water cooling circuit 206 can easily be preformed before the body 202 is formed. The water cooling circuit 206 is arranged to received water from the water tank 108 at a water inlet 212. Steam is ejected from the water cooling circuit 206 at a steam outlet 214 which delivers steam to the steam cleaning head 102. By embedding a tube in the body, seals are not required to create a water tight channel through the boiler 200. This also allows more freedom of cross sectional areas of cooling circuit and freedom of material choice. In some embodiments the material of the water cooling circuit coil 206 can be stainless steel providing a low corrosion property, copper providing a high thermal conductivity, or carbon steel providing a low cost. Alternatively any other suitable material can be used for the water cooling circuit coil 206.

Known boiler designs, such as shown in US 8,554,063 may cast the water cooling circuit in aluminium. At elevated temperatures the aluminium readily oxidises and the cross section of the water cooling circuit coil needs to be large enough to accommodate oxidation and calcification. Advantageously by selecting an alternative material for the water cooling circuit coil, a smaller diameter coil can be used.

The water cooling circuit 206, despite the name, heats the water from the water tank 108 and coverts the water into steam. The term "cooling" is used because the water cooling circuit 206 absorbs heat from the boiler 200. In this way the water cooling circuit 206 cools the body 202 and the heating element 204. In fact the water cooling circuit 206 is a heat exchanger and the thermal energy transfer also heats the water up. The water cooling circuit 206 can also be considered to be a water heating circuit, but the term water cooling circuit 206 will be used hereinafter.

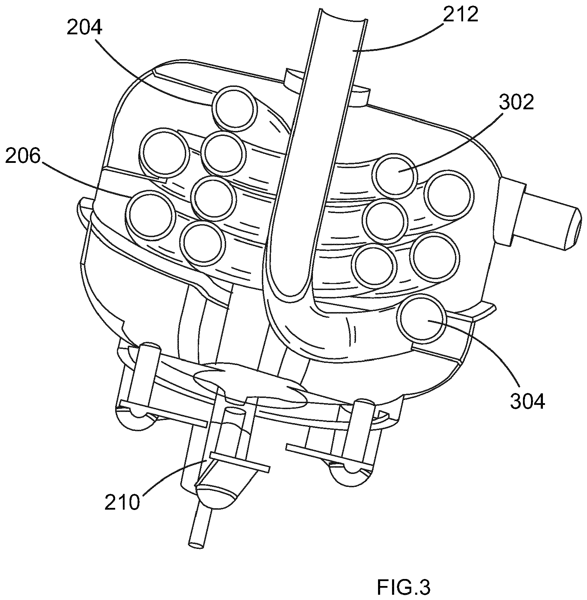

Turning to Figure 3, the boiler 200 will be discussed in further detail. Figure 3 shows a cross sectional view of the boiler 200 across the line A-A. The heating element 204 comprises a first coiled portion 302. The first coiled portion 302 is located between the first and second terminals 210, 208 of the heating element 204. The first coiled portion 302 of the heating element 204 comprises three complete turns. In other embodiments there can be any number of complete turns in the first coiled portion 302. The first coiled portion 302 in some embodiments is a helical coil and extends along a longitudinal axis A-A of the boiler 200. In some other embodiments the first coiled portion 302 can be a spiral, or comprise an irregular curved path. The first coiled portion 302 can be any suitable shape for transferring heat energy to the cast body 202 which wraps around the water inlet 212.

Similarly the water cooling circuit 206 comprises a second coiled portion 304. The second coiled portion 304 of the water cooling circuit 206 is located between the water inlet 212 and the steam outlet 214 comprises two complete turns. In other embodiments there can be any number of complete turns in the second coiled portion 304. The second coiled portion 304 of the water cooling circuit 206 in some embodiments is a helical coil and also extends along the longitudinal axis A-A of the boiler 200. In some other embodiments the second coiled portion 304 can also be a spiral, or comprise an irregular curved path. The second coiled portion 304 can be any suitable shape for transferring heat energy from the body and heating element 204 to the water in the water cooling circuit 206 which wraps around the heating element 204.

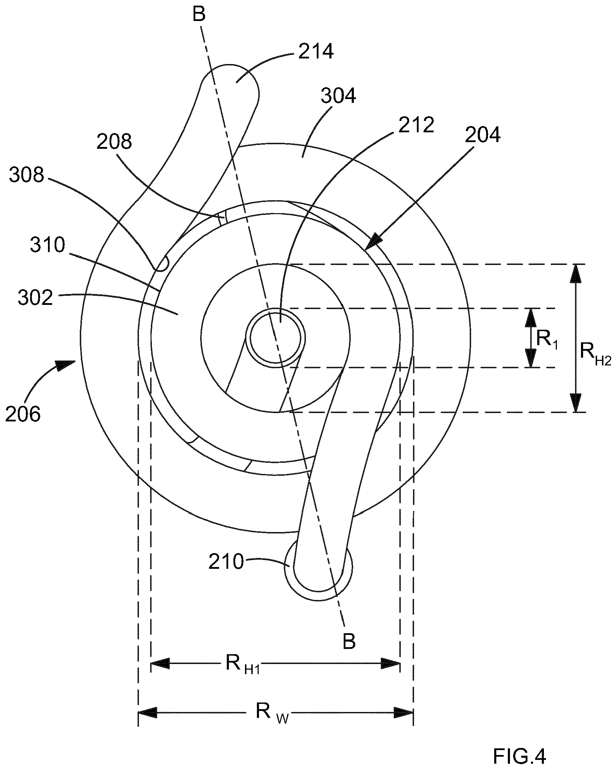

The relationship between the water cooling circuit 206 and the heating element 204 will now be discussed with respect to Figure 4. Figure 4 shows a partial plan view of the heating element 204 and the water cooling circuit 206. The cast body 202 and other parts of the boiler 200 are not shown for the purposes of clarity.

The first coiled portion 302 of the heating element 204 is nested inside the second coiled portion 304 of the water cooling circuit 206. The longitudinal axes of the first and second coiled portions 302, 304 are substantially aligned with each other. In some embodiments, both the longitudinal axes first and second coiled portions 302, 304 are concentric with the longitudinal axis A-A of the boiler 200. In some embodiments, the water inlet 212 of the water cooling circuit is aligned with the axis A-A and is also concentric with the first and second coiled portions 302, 304. In some alternative embodiments the water inlet 212 can be offset from the axis A-A. Furthermore the longitudinal axis of the first coiled portion 302 can also be offset from the axis A-A.

The inventors have found that the hottest part of the heating element 204 is within the centre of the first coiled portion 302. This is because there is less thermal mass inside the heating coil than outside. This means in use when water is pumped from the water tank to the boiler, cold water in the water inlet 212 is adjacent the hottest part of the boiler 200. The greater the temperature difference between the water at the water inlet 212 and the centre of the boiler 200, the greater the heat transfer. The boiler 200 is compact and therefore has a relatively small thermal inertia. This means that the boiler 200 can change temperature more quickly than other boilers with a larger thermal mass. Reducing the thermal mass of a boiler 200 may increase the time for a new flow rate to reach a thermal equilibrium between heat in the boiler system and heat out of the boiler system. The temperature gradient between the cold water and the boiler will be greatest at the water inlet 212. Therefore given that the rate of thermal energy transfer is dependent on the temperature gradient, the heat removed from the boiler will be greatest at the water inlet 212. This means that the cold water will heat up quickest when the water inlet 212 is located within the heating element 212. Furthermore by putting the water inlet 212 at the centre of the boiler 200, which is the hottest part of the boiler 200, the boiler is less likely to stall.

This means that the centre of the boiler 200 comprises the hollow tube of the water cooling circuit 206 which is immediately surrounded by the body 202. By forming the body 202 in the centre of the heating element 204, the thermal energy from the heating element 204 can be better transferred to the entire cast body of the boiler 200.

However in other less preferable embodiments boiler 200 can be operated in the opposite direction. For example the steam outlet 214 is positioned in the centre of the first and second coiled portions 302, 304 and the water inlet 212 is located outside the first and second coiled portions 302, 304. If the steam outlet 214 is positioned in the centre of the boiler, then the flow rate from the water tank 108 has to be carefully regulated. In this embodiment the boiler 200 is likely to convert less total flow of water to steam but is likely to produce a higher degree of superheated steam.

As mentioned above, the first coiled portion 302 is nested inside the second coiled portion 304. In this way the radius R_{H1} of the outer surface first coiled portion 302 is smaller than the radius R_{W} of the inner surface of the second coiled portion 304. The size of the first coiled portion 302 is such that an outer surface 310 of the first coiled portion 302 is substantially adjacent to the inside surface 310 of the second coiled portion 304. The first and second coiled portions 302, 304 do not abut, but leave a small space therebetween so that the entire surface area of both the first and second coils 302, 304 can be surrounded by the cast body 202. This increases the thermal transfer between the heating element 204 and the water cooling circuit 206. This also allows for easy assembly of the boiler 200.

The radius R_{H2} of the inner surface of the first coiled portion 302 of the heating element 204 is greater than the radius R_{I} of the outer surface of the water inlet 212. In this way the water inlet 212 can be inserted into the centre of the first coiled portion 302 of the heating element 204.

The first terminal 208 of the heating element 204 is positioned inside the radius of the second coiled portion 304. The second terminal 210 of the heating element 204 is positioned outside of the second coiled portion 304. This conveniently means that the heating element 204 can be threaded through the inside of the water cooling circuit 206 before the body 202 is formed.

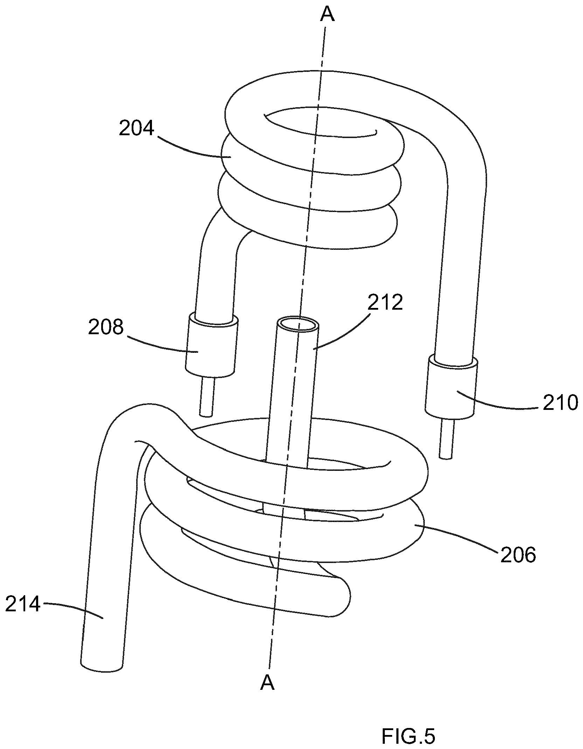

The heating element 204 and water cooling circuit are also shown in Figure 5. Figure 5 shows a perspective view of the heating element 204 and the water cooling circuit 206 in an exploded view. Similar to Figure 4, the cast body 202 and the other parts of the boiler are not shown for clarity. The heating element 204 and the water cooling circuit 206 are separated from each other by a translational movement only along the longitudinal axis of the boiler A-A.

Each of the first terminal 208, the second terminal 210, the water inlet 212 and the water outlet 214 are substantially aligned along the same plane B-B (as shown in Figure 4). Furthermore each of the first terminal 208, the second terminal 210, the water inlet 212 and the water outlet 214 comprise a straight portion which are substantially aligned parallel with the longitudinal axis A-A of the boiler.

Figure 5 shows the first terminal 208, the second terminal 210 and the steam outlet 214 projecting from the same side of the boiler 200 and the water inlet 212 projecting from another side of the boiler 200. The sides of the boiler 200 from which the terminals 208, 210 and the inlet 212 and outlet 214 project are on opposite sides of the boiler 200. By having the water inlet 212 and the steam outlet 214 projecting from opposite sides of the boiler, the size of the boiler 200 can be reduced. This is because space does not have to be provided in the boiler for a 180 degree bend in the water cooling circuit.

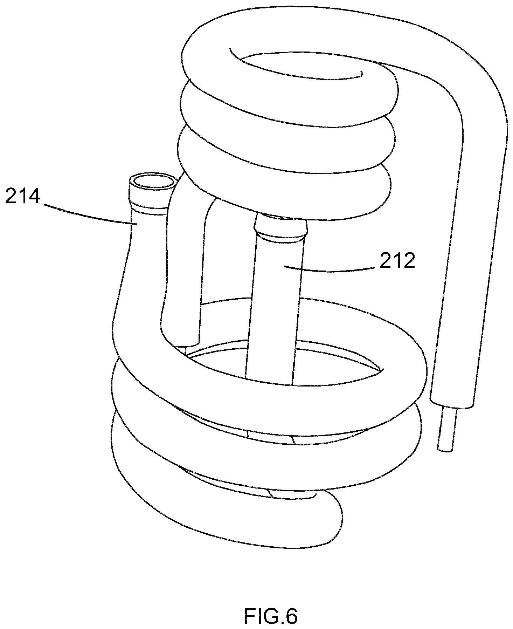

Figure 6 shows an alternative embodiment of the boiler. Figure 6 is the same as the embodiment as shown in Figure 5 except that the water inlet 212 and the steam outlet 214 project from the same side of the boiler 200. In this embodiment the first and second terminals 208, 210 project from a first side of the boiler 200 and the water inlet 212 and the steam outlet 214 project from a second side. The first and second sides of the boiler 200 from which the terminals 208, 210 and the inlet 212 and outlet 214 project are on opposite sides of the boiler 200.

In an alternative embodiment, which is not shown in the figures, the boiler 200 is the same as discussed in the preceding embodiments except that the respective locations of the heating element 204 and the water cooling circuit 206 are reversed. That is, the heating element 204 surrounds the water cooling circuit 206. However it is preferable to wrap the water cooling circuit 206 around the heating element 24. This is because the water flow path across the boiler is longer because the radius of the second coiled portion is greater. In this way the water flow path is greater and the thermal transfer from the heating element 204 to the water / steam in the water cooling circuit 206 will be greater.

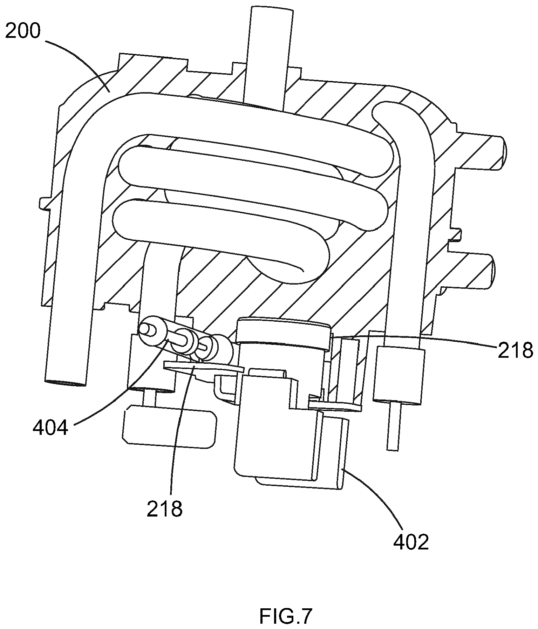

Figure 7 shows a schematic representation side view of the exterior of the boiler 200 as discussed in reference to Figures 2 to 5. As mentioned previously, the cast body 202 comprises sensor mounting points 218. In some embodiments a thermostat 402 and a thermal tip 404 are mounted to the exterior of the cast body 202 of the boiler 200. The thermostat 402 is used for determining the exterior temperature of the boiler 200. The thermostat 402 provides a signal input to the control circuit for controlling the power supplied to the heating element 204. Control of a heating element 204 with a thermostat 402 and control circuit is known and will not be discussed in any further detail.

The thermal trip 404 is a safety feature which breaks the electrical circuit if the boiler exceeds a predetermined maximum safe operating temperature.

Turning back to Figure 5, manufacture of the boiler will now be discussed in further detail. The heating element 204 and the water cooling circuit 206 are arranged to be nestable. The heating element 204 and the water cooling circuit 206 are preformed and coiled before assembly. This means that manufacturing the boiler is simpler because the separate elements of the heating element 204 and the water cooling circuit 206 do not have to be bent, formed or moulded in situ just before the boiler 200 is cast.

After the heating element 204 and the water cooling circuit 26 have been formed, the first coiled portion 302 of the heating element 204 is slid over the water inlet 212 of the water cooling circuit 206. Due to the construction and shape of the heating element 204 and the water cooling circuit 206, only a translational movement along the longitudinal axis of the boiler is required. Referring to Figure 5, this is a movement of the heating element 204 towards the water cooling circuit 206 along axis A-A. No rotation of the heating element is required to insert the heating element into the water cooling circuit. This makes assembly easier and less likely to damage the components of the boiler. At the same time the first coiled portion 302 of the heating element 204 is inserted into the inside of the water cooling circuit 206. The first terminal 208 may be inserted through the centre of the second coiled portion 304.

The terminals 208, 210 of the heating element 204 and the water inlet 212 and the steam outlet 214 water cooling circuit 206 may optionally be clamped to fix the relative position between the heating element 204 and the water cooling circuit 206.

The heating element 204 and the water cooling circuit are then placed in a mould and the boiler body 202 is formed around the heating element 204 and the water cooling circuit 206. The body 202 may be cast from aluminium or any other suitable metal or material. The heating elements 204 and the water cooling circuit 206 are then embedded in the body 202 of the boiler.

This provides a compact yet reliable boiler for a steam mop.

In another embodiment two or more embodiments are combined. Features of one embodiment can be combined with features of other embodiments within the scope of the claims.

Embodiments of the present invention have been discussed with particular reference to the examples illustrated. However it will be appreciated that variations and modifications may be made to the examples described within the scope of the claims.

## Claims

1. A boiler (200) suitable for use in a steam cleaning apparatus comprising:
a body (202);
a water cooling circuit (206) having a water inlet (212) and a steam outlet (214) and the water cooling circuit comprises a second coiled portion;
a heating element (204) having a first terminal (208) and a second terminal (210) and the heating element comprises a first coiled portion;
wherein one of the heating element and the water cooling circuit are nested inside the other of the heating element and the water cooling circuit; and
the first coiled portion of the heating element and the second coiled portion of the water cooling circuit are positioned around one of the first terminal, the second terminal, the water inlet and the steam outlet; and **characterised in that**:
at least the first coiled portion of the heating element and the second coiled portion of the water cooling circuit are embedded in the body; and the water cooling circuit is a hollow tube.

2. A boiler according to claim 1 wherein the first coiled portion of the heating element (204) is nested inside the second coiled portion of the water cooling circuit (206).

3. A boiler according to claims 1 or 2 wherein the first terminal (208), the second terminal (210), the water inlet (212) and the steam outlet (214) are substantially parallel to a longitudinal axis of the boiler (200).

4. A boiler according to claims 1 to 3 wherein the longitudinal axes of the first coiled portion of the heating element (204) and the second coiled portion of the water cooling circuit (206) are substantially parallel to a longitudinal axis of the boiler (200).

5. A boiler according to claims 1 to 4 wherein the water inlet (212) of the water cooling circuit (206) is positioned inside and concentric with the coiled portions of the heating element (204) and the water cooling circuit.

6. A boiler according to claim 1 to 4 wherein the steam outlet (214) of the water cooling circuit (206) is positioned inside and concentric with the coiled portions of the heating element (204) and the water cooling circuit.

7. A boiler according to any of the preceding claims wherein the first terminal (208), the second terminal (210), the water inlet (212) and the steam outlet (214) are substantially aligned in the same plane.

8. A boiler according to any of the preceding claims wherein the water cooling circuit (206) is a tube embedded in the cast body.

9. A boiler according to any of the preceding claims wherein the first and second terminals (208 and 210) project from a first side of the body (202) and the water inlet (212) projects from a second, different side of the body (202).

10. A boiler according to claim 9 wherein the steam outlet (214) projects from the second side of the body (202).

11. A boiler according to any of the preceding claims wherein one of the first terminal (208) and the second terminal (210) is positioned inside the second coiled portion of the water cooling circuit (206) and the other of the first terminal and the second terminal is positioned outside the second coiled portion of the water cooling circuit.

12. A boiler according to any of the preceding claims wherein one of the water inlet (212) and the steam outlet (214) is positioned inside the first coiled portion of the heating circuit (204) and the other of the water inlet and the steam output is positioned outside the first coiled portion of the heating circuit.

13. A boiler according to any of the preceding claims wherein the outer surface of the first coiled portion of the heating element (204) is adjacent a surface of the second coiled portion of the water cooling circuit (206).

14. A steam cleaning apparatus (100) comprising a boiler (200) according to any of the preceding claims.

15. A method of manufacturing of a boiler suitable for use in a steam cleaning apparatus comprising:
forming a heating element (204) comprising a first terminal (208) and a second terminal (210) and a first coiled portion;
forming a hollow tubular water cooling circuit (206) comprising a water inlet (212) and a steam outlet (214) and a second coiled portion;
placing one of the first coiled portion of the heating element and the second coiled portion of the water cooling circuit inside the other of the first coiled portion of the heating element and the second coiled portion of the water cooling circuit such that the first coiled portion of the heating element and the second coiled portion of the water cooling circuit are positioned around one of the first terminal, the second terminal, the water inlet and the steam outlet; and
forming a body (202) around at least the first coiled portion of heating element and the second coiled portion of the water cooling circuit such that the coiled portions of the heating element and the water cooling circuit are embedded in the body.

## Patentansprüche

1. Für die Verwendung in einer Dampfreinigungsvorrichtung geeigneter Kessel (200), welcher umfasst:
einen Körper (202);
einen Wasserkühlkreislauf (206), welcher einen Wassereinlass (212) und einen Dampfauslass (214) aufweist, und wobei der Wasserkühlkreislauf einen zweiten gewundenen Abschnitt umfasst;
ein Heizelement (204), welches einen ersten Anschluss (208) und einen zweiten Anschluss (210) aufweist, und wobei das Heizelement einen ersten gewundenen Abschnitt umfasst;
wobei eines von dem Heizelement und dem Wasserkühlkreislauf innerhalb des anderen von dem Heizelement und dem Wasserkühlkreislauf eingebettet sind; und
der erste gewundene Abschnitt des Heizelements und der zweite gewundene Abschnitt des Wasserkühlkreislaufs rund um einen von dem ersten Anschluss, dem zweiten Anschluss, dem Wassereinlass und dem Dampfauslass positioniert sind; und **dadurch gekennzeichnet, dass**:
zumindest der erste gewundene Abschnitt des Heizelements und der zweite gewundene Abschnitt des Wasserkühlkreislaufs in dem Körper integriert sind; und der Wasserkühlkreislauf ein Hohlrohr ist.

2. Kessel nach Anspruch 1, wobei der erste gewundene Abschnitt des Heizelements (204) innerhalb des zweiten gewundenen Abschnitts des Wasserkühlkreislaufs (206) eingebettet ist.

3. Kessel nach Ansprüche 1 oder 2, wobei der erste Anschluss (208), der zweite Anschluss (210), der Wassereinlass (212) und der Dampfauslass (214) im Wesentlichen parallel zu einer Längsachse des Kessels (200) sind.

4. Kessel nach Ansprüche 1 bis 3, wobei die Längsachsen des ersten gewundenen Abschnitts des Heizelements (204) und des zweiten gewundenen Abschnitts des Wasserkühlkreislaufs (206) im Wesentlichen parallel zu einer Längsachse des Kessels (200) sind.

5. Kessel nach Ansprüche 1 bis 4, wobei der Wassereinlass (212) des Wasserkühlkreislaufs (206) innerhalb und konzentrisch mit den gewundenen Abschnitten des Heizelements (204) und des Wasserkühlkreislaufs positioniert sind.

6. Kessel nach Anspruch 1 bis 4, wobei der Dampfauslass (214) des Wasserkühlkreislaufs (206) innerhalb und konzentrisch mit den gewundenen Abschnitten des Heizelements (204) und des Wasserkühlkreislaufs positioniert sind.

7. Kessel nach einem der vorstehenden Ansprüche, wobei der erste Anschluss (208), der zweite Anschluss (210), der Wassereinlass (212) und der Dampfauslass (214) im Wesentlichen in derselben Ebene ausgerichtet sind.

8. Kessel nach einem der vorstehenden Ansprüche, wobei der Wasserkühlkreislauf (206) ein in dem Gusskörper integriertes Rohr ist.

9. Kessel nach einem der vorstehenden Ansprüche, wobei der erste und zweite Anschluss (208 und 210) aus einer ersten Seite des Körpers (202) herausragen und der Wassereinlass (212) aus einer zweiten, unterschiedlichen Seite des Körpers (202) herausragt.

10. Kessel nach Anspruch 9, wobei der Dampfauslass (214) aus der zweiten Seite des Körpers (202) herausragt.

11. Kessel nach einem der vorstehenden Ansprüche, wobei einer von dem ersten Anschluss (208) und dem zweiten Anschluss (210) innerhalb des zweiten gewundenen Abschnitts des Wasserkühlkreislaufs (206) positioniert ist und der andere von dem ersten Anschluss und dem zweiten Anschluss außerhalb des zweiten gewundenen Abschnitts des Wasserkühlkreislaufs positioniert ist.

12. Kessel nach einem der vorstehenden Ansprüche, wobei einer von dem Wassereinlass (212) und dem Dampfauslass (214) innerhalb des ersten gewundenen Abschnitts des Heizkreislaufs (204) positioniert ist und der andere von dem Wassereinlass und dem Dampfauslass außerhalb des ersten gewundenen Abschnitts des Heizkreislaufs positioniert ist.

13. Kessel nach einem der vorstehenden Ansprüche, wobei die äußere Oberfläche des ersten gewundenen Abschnitts des Heizelements (204) an eine Oberfläche des zweiten gewundenen Abschnitts des Wasserkühlkreislaufs (206) angrenzt.

14. Dampfreinigungsvorrichtung (100), umfassend einen Kessel (200) nach einem der vorstehenden Ansprüche.

15. Verfahren zur Herstellung eines für die Verwendung in einer Dampfreinigungsvorrichtung geeigneten Kessels, welches umfasst:
Bilden eines Heizelements (204), welches einen ersten Anschluss (208) und einen zweiten Anschluss (210) und einen ersten gewundenen Abschnitt umfasst;
Bilden eines hohlrohrförmigen Wasserkühlkreislaufs (206), welcher einen Wassereinlass (212) und einen Dampfauslass (214) und einen zweiten gewundenen Abschnitt umfasst;
Platzieren von einem von dem ersten gewundenen Abschnitt des Heizelements und dem zweiten gewundenen Abschnitt des Wasserkühlkreislaufs innerhalb des anderen von dem ersten gewundenen Abschnitt des Heizelements und dem zweiten gewundenen Abschnitt des Wasserkühlkreislaufs, sodass der erste gewundene Abschnitt des Heizelements und der zweite gewundene Abschnitt des Wasserkühlkreislaufs rund um einen von dem ersten Anschluss, dem zweiten Anschluss, dem Wassereinlass und dem Dampfauslass positioniert sind; und
Bilden eines Körpers (202) rund um zumindest den ersten gewundenen Abschnitt des Heizelements und den zweiten gewundenen Abschnitt des Wasserkühlkreislaufs, sodass die gewundenen Abschnitte des Heizelements und des Wasserkühlkreislaufs in dem Körper integriert sind.

## Revendications

1. Chaudière (200) convenant à une utilisation dans un appareil de nettoyage à la vapeur comprenant :
un corps (202) ;
un circuit de refroidissement d'eau (206) ayant une entrée d'eau (212) et une sortie de vapeur (214) et le circuit de refroidissement d'eau comprenant une seconde partie enroulée ;
un élément de chauffage (204) ayant une première borne (208) et une seconde borne (210) et l'élément de chauffage comprenant une première partie enroulée ; et
dans laquelle l'un de l'élément de chauffage et du circuit de refroidissement d'eau est logé à l'intérieur de l'autre de l'élément de chauffage et du circuit de refroidissement d'eau ; et
la première partie enroulée de l'élément de chauffage et la seconde partie enroulée du circuit de refroidissement d'eau sont positionnées autour de l'une de la première borne, de la seconde borne, de l'entrée d'eau et de la sortie de vapeur, et **caractérisée en ce que** :
au moins la première partie enroulée de l'élément de chauffage et la seconde partie enroulée du circuit de refroidissement d'eau sont imbriquées dans le corps ; et le circuit de refroidissement d'eau est un tube creux.

2. Chaudière selon la revendication 1, dans laquelle la première partie enroulée de l'élément de chauffage (204) est logée à l'intérieur de la seconde partie enroulée du circuit de refroidissement d'eau (206).

3. Chaudière selon les revendications 1 ou 2, dans laquelle la première borne (208), la seconde borne (210), l'entrée d'eau (212) et la sortie de vapeur (214) sont sensiblement parallèles à un axe longitudinal de la chaudière (200).

4. Chaudière selon les revendications 1 à 3, dans laquelle les axes longitudinaux de la première partie enroulée de l'élément de chauffage (204) et de la seconde partie enroulée du circuit de refroidissement d'eau (206) sont sensiblement parallèles à un axe longitudinal de la chaudière (200).

5. Chaudière selon les revendications 1 à 4, dans laquelle l'entrée d'eau (212) du circuit de refroidissement d'eau (206) est positionnée à l'intérieur des parties enroulées de l'élément de chauffage (204) et du circuit de refroidissement d'eau et est concentrique avec celles-ci.

6. Chaudière selon les revendications 1 à 4, dans laquelle la sortie de vapeur (214) du circuit de refroidissement d'eau (206) est positionnée à l'intérieur des parties enroulées de l'élément de chauffage (204) et du circuit de refroidissement d'eau et est concentrique avec celles-ci.

7. Chaudière selon l'une quelconque des revendications précédentes, dans laquelle la première borne (208), la seconde borne (210), l'entrée d'eau (212) et la sortie de vapeur (214) sont sensiblement alignées dans le même plan.

8. Chaudière selon l'une quelconque des revendications précédentes, dans laquelle le circuit de refroidissement d'eau (206) est un tube imbriqué dans le corps moulé.

9. Chaudière selon l'une quelconque des revendications précédentes, dans laquelle la première et la seconde borne (208 et 210) font saillie d'un premier côté du corps (202) et l'entrée d'eau (212) fait saillie d'un second côté différent du corps (202).

10. Chaudière selon la revendication 9, dans laquelle la sortie de vapeur (214) fait saillie du second côté du corps (202).

11. Chaudière selon l'une quelconque des revendications précédentes, dans laquelle l'une de la première borne (208) et de la seconde borne (210) est positionnée dans la seconde partie enroulée du circuit de refroidissement d'eau (206) et l'autre de la première borne et de la seconde borne est positionnée à l'extérieur de la seconde partie enroulée du circuit de refroidissement d'eau.

12. Chaudière selon l'une quelconque des revendications précédentes, dans laquelle l'une de l'entrée d'eau (212) et de la sortie de vapeur (214) est positionnée dans la première partie enroulée du circuit de chauffage (204) et l'autre de l'entrée d'eau et de la sortie de vapeur est positionnée à l'extérieur de la première partie enroulée du circuit de chauffage.

13. Chaudière selon l'une quelconque des revendications précédentes, dans laquelle la surface externe de la première partie enroulée de l'élément de chauffage (204) est adjacente à une surface de la seconde partie enroulée du circuit de refroidissement d'eau (206).

14. Appareil de nettoyage à la vapeur (100) comprenant une chaudière (200) selon l'une quelconque des revendications précédentes.

15. Procédé de fabrication d'une chaudière convenant à une utilisation dans un appareil de nettoyage à la vapeur, comprenant :
la formation d'un élément de chauffage (204) comprenant une première borne (208) et une seconde borne (210) et une première partie enroulée ;
la formation d'un circuit de refroidissement d'eau tubulaire creux (206) comprenant une entrée d'eau (212) et une sortie de vapeur (214) et une seconde partie enroulée ;
la mise en place de l'une de la première partie enroulée de l'élément de chauffage et de la seconde partie enroulée du circuit de refroidissement d'eau à l'intérieur de l'autre de la première partie enroulée de l'élément de chauffage et de la seconde partie enroulée du circuit de refroidissement d'eau de sorte que la première partie enroulée de l'élément de chauffage et la seconde partie enroulée du circuit de refroidissement d'eau soient positionnées autour de l'une de la première borne, de la seconde borne, de l'entrée d'eau et de la sortie de vapeur ; et
la formation d'un corps (202) autour d'au moins la première partie enroulée de l'élément de chauffage et de la seconde partie enroulée du circuit de refroidissement d'eau de sorte que les parties enroulées de l'élément de chauffage et du circuit de refroidissement d'eau soient imbriquées dans le corps.
